# EUROPÄISCHE PATENTSCHRIFT

(11) **EP 2 293 956 B1**
(45) Veröffentlichungstag und Bekanntmachung des Hinweises auf die Patenterteilung: **10.07.2013**
(21) Anmeldenummer: 09761342.6
(22) Anmeldetag: 24.03.2009
(51) Int. Cl.: B60K 17/354, B60K 17/356, B60K 6/52

(54) **ANTRIEBSSTRANG FÜR EIN KRAFTFAHRZEUG**
DRIVE TRAIN FOR A MOTOR VEHICLE
CHAÎNE CINÉMATIQUE POUR VÉHICULE À MOTEUR

(30) Priorität: 11.06.2008 DE 102008029287
(43) Veröffentlichungstag der Anmeldung: 16.03.2011
(73) Patentinhaber: GETRAG Getriebe- und Zahnradfabrik Hermann Hagenmeyer GmbH & Cie KG, 74199 Untergruppenbach (DE)
(72) Erfinder: KNOBLAUCH, Daniel, 74199 Untergruppenbach (DE)
(74) Vertreter: Witte, Weller & Partner
(86) Internationale Anmeldenummer: PCT/EP2009/002128
(87) Internationale Veröffentlichungsnummer: WO 2009/149779

(56) Entgegenhaltungen:
- EP-A- 0 409 610
- EP-A- 1 506 890
- EP-A- 1 526 027
- EP-A- 1 571 751
- WO-A-2007/085348
- DE-A1- 10 319 108
- DE-A1- 19 917 724
- DE-A1-102006 010 616
- JP-A- 2008 256 007
- US-A- 5 620 387
- US-A1- 2007 093 341

## Beschreibung

Die vorliegende Erfindung betrifft einen Antriebsstrang für ein Kraftfahrzeug gemäß dem Oberbegriff des Anspruchs 1, wobei das Kraftfahrzeug eine erste und eine zweite Achse aufweist, mit einer ersten Antriebseinheit zum permanenten Antrieb der ersten Achse und mit einer elektrischen Antriebseinheit, die im Bereich der zweiten Achse angeordnet ist und einen elektrischen Motor aufweist.

Ein derartiger Antriebsstrang ist bekannt aus dem Dokument EP 1 571 751 A1.

Auf dem Gebiet der Kraftfahrzeuge, insbesondere auf dem Gebiet der Personenkraftwagen, besteht ein Trend hin zu Allradfahrzeugen, bei denen sowohl die erste als auch die zweite Achse mit Antriebsleistung versorgt werden kann. Klassisch erfolgt dies mechanisch über ein Verteilergetriebe, das die Antriebsleistung auf die erste und die zweite Achse verteilt.

Das Verteilergetriebe kann bspw. ein Längsdifferential aufweisen, das die Antriebsleistung in einem festen Verhältnis auf die zwei Achsen verteilt, oder eine Hang-On-Kupplung, mittels der die Antriebsleistung zu einer der zwei Achsen nur bei Bedarf zugeführt wird.

Ein weiterer Trend auf dem Gebiet der Kraftfahrzeuge sind Hybrid-Antriebsstränge, die sowohl einen Verbrennungsmotor als auch eine elektrische Maschine aufweisen. Hierbei ist es bekannt, die erste Achse mittels der Antriebseinheit anzutreiben, die einen Verbrennungsmotor aufweist, und die zweite Achse mittels einer elektrischen Maschine anzutreiben (bspw. aus dem Dokument DE 103 19 108 A1).

In diesem Fall ist die elektrische Maschine im Bereich der zweiten Achse angeordnet und kann parallel zu einer Eingangswelle eines Querdifferentials der zweiten Achse ausgerichtet sein.

Es sind auch Systeme bekannt, bei denen eine elektrische Maschine im Bereich der ersten Antriebseinheit angeordnet ist, wobei die von der elektrischen Maschine bereitgestellte Leistung über eine Kardanwelle zu der zweiten Achse übertragen wird.

Die elektrische Maschine ist dabei häufig nur für einen bestimmten Geschwindigkeits- oder Drehmomentbereich ausgelegt.

Bei Schaltkupplungen, die in solchen Antriebssträngen verwendet werden, ist es zum einen nachteilig, dass diese häufig durch eigene Motoren oder durch Hydraulik betätigt werden müssen. Zudem ist eine Erfassung des jeweiligen Schaltzustandes häufig problematisch.

Aus dem Dokument DE 10 2006 010 616 A1 ist eine elektromagnetische Schalteinrichtung für Getriebe bekannt, wobei die Schalteinrichtung ein Schaltelement aufweist, das in einer Axialrichtung verschieblich angeordnet ist und mit einem in Axialrichtung magnetisierten Permanentmagneten verbunden ist. Die Schalteinrichtung beinhaltet ferner einen ersten und einen zweiten Elektromagneten, die in Axialrichtung voneinander beabstandet und ortsfest in Bezug auf das Getriebe angeordnet sind, wobei ein Hall-Sensor zur Sensierung der Verschiebestellung des Schaltelementes vorgesehen ist.

Aus dem Dokument US 2007/0093341 A1 ist ein Hybrid-Antriebsstrang für Nutzfahrzeuge bekannt, der einen Verbrennungsmotor und ein Subsystem mit einem elektrischen Motor und einen Generator beinhaltet. Ausgehend von einer Vorderachse weist der Antriebsstrang den Verbrennungsmotor, einen Generator, einen ersten Planetenradsatz sowie ein Schaltkupplungspaket und eine zweite Planetenradsatzanordnung sowie einen Elektromotor auf, wobei der Elektromotor fest mit einem Eingangsglied eines Vorderachsdifferentials verbunden ist sowie über eine Kupplung mit einem Eingangsglied eines Hinterachsdifferentials.

Vor diesem Hintergrund ist es die Aufgabe der Erfindung, einen Hybridantriebsstrang für ein allradgetriebenes Kraftfahrzeug anzugeben, wobei der Antriebsstrang vom Bauraum her günstig integrierbar ist und die elektrische Maschine über einen großen Betriebsbereich verwendbar ist.

Diese Aufgabe wird durch einen Antriebsstrang für ein Kraftfahrzeug gemäß Anspruch 1 gelöst, wobei das Kraftfahrzeug eine erste und eine zweite Achse aufweist, mit einer ersten Antriebseinheit zum permanenten Antrieb der ersten Achse und mit einer elektrischen Antriebseinheit, die im Bereich der zweiten Achse angeordnet ist und einen elektrischen Motor sowie ein Schaltkupplungspaket aufweist, das eine erste Schaltkupplung zur Einrichtung einer ersten Übersetzung und eine zweite Schaltkupplung zur Einrichtung einer zweiten Übersetzung zwischen dem elektrischen Motor und einem Ausgang der elektrischen Antriebseinheit beinhaltet, wobei die elektrische Antriebseinheit parallel, insbesondere koaxial zu einer Eingangswelle eines Querdifferentials der zweiten Achse angeordnet ist.

Durch die Maßnahme, in die elektrische Antriebseinheit ein Schaltkupplungspaket zu integrieren, das eine erste und eine zweite Schaltkupplung zur Einrichtung unterschiedlicher Übersetzungen aufweist, lässt sich die elektrische Antriebseinheit über einen weiten Betriebsbereich verwenden.

Ferner ergibt sich eine gute Bauraumnutzung und eine gute Gewichtsverteilung des Antriebsstranges. Zudem kann die zweite Achse mit dem Querdifferential im Wesentlichen identisch ausgebildet werden zu einer bereits in Serie gebauten, konventionellen Allradvariante des Fahrzeugs.

Im vorliegenden Zusammenhang soll der Begriff "verbinden" bedeuten, dass zwei Bauteile entweder starr direkt miteinander verbunden oder aber auch indirekt verbunden sind. Unter einer "Verbindung" soll folglich verstanden werden, dass über die Verbindung ein Leistungsfluss fließen kann. Der Begriff "angeordnet" soll, je nach Zusammenhang, sowohl räumlich verstanden werden, als auch so, dass über die so geschaffene Anordnung ein Leistungsfluss erfolgen kann.

Ferner soll der Begriff "elektrischer Motor" im vorliegenden Zusammenhang als elektrische Maschine verstanden werden, die sowohl im Motor- als auch im Generatorbetrieb arbeiten kann.

Unter einem "Differential" wird vorliegend sowohl ein mechanisches Differential, wie ein Kegelraddifferential, als auch eine Twin-Kupplungsanordnung verstanden, bei der die Räder der zugeordneten Achse über unabhängige Reibkupplungen mit Leistung versorgt werden.

Vorzugsweise weist die elektrische Antriebseinheit nur einen einzigen Ausgang auf, so dass die Gesamtkonstruktion einfach ausgeführt werden kann.

Vorzugsweise ist der Ausgang der elektrischen Antriebseinheit starr bzw. verdrehstarr mit der Eingangswelle des Querdifferentials verbunden. Hierdurch ist es möglich, die von dem elektrischen Motor bereitgestellte Antriebsleistung direkt auf die zweite Achse zu übertragen. Bei dieser Ausführungsform ist es nicht unbedingt notwendig, eine Kardanwelle zwischen der ersten und der zweiten Achse vorzusehen. Die Leistungen der ersten Antriebseinheit und der elektrischen Antriebseinheit können "über die Fahrbahn" miteinander kombiniert werden.

Hierbei ist es von Vorzug, wenn der Ausgang der elektrischen Antriebseinheit über eine Kupplung mit einer Ölpumpe zur Fluidversorgung der elektrischen Antriebseinheit verbunden ist.

Generell ist hierbei bevorzugt, wenn die Ölpumpe zur Fluidversorgung (insbesondere Schmierung) mit der elektrischen Antriebseinheit integriert ausgebildet wird. Die Kupplung kann eine starre Verbindung sein, ist jedoch im Idealfall eine Kupplung, die mit der elektrischen Antriebseinheit integriert ausgebildet ist und in anderen Varianten des Antriebsstranges auch als Hang-On-Kupplung verwendet werden kann (bspw., wenn die erste Achse und die zweite Achse über eine Kardanwelle miteinander verbunden sind).

Gemäß einer weiteren bevorzugten Ausführungsform ist der Ausgang der elektrischen Antriebseinheit über eine Reibkupplung mit einer Eingangswelle des Querdifferentials verbindbar.

Bei dieser Ausführungsform ist es möglich, die von dem elektrischen Motor bereitgestellte Leistung nur nach Bedarf der zweiten Achse zuzuführen. Dabei ist es jedoch ggf. auch möglich, die Ausgangsleistung des elektrischen Motors über eine Kardanwelle der ersten Achse zuzuführen (bspw., um dort einen Verbrennungsmotor der ersten Antriebseinheit zu starten oder Ähnliches).

Ferner ist es vorteilhaft, wenn der Ausgang der elektrischen Antriebseinheit über eine Reibkupplung mit einer Kardanwelle verbindbar ist, die mit der ersten Antriebseinheit verbunden ist.

Bei dieser Ausführungsform kann der zweiten Achse Leistung sowohl von dem elektrischen Motor der elektrischen Antriebseinheit zugeführt werden als auch über die Kardanwelle und die Reibkupplung von der ersten Antriebseinheit.

Insgesamt ist es bevorzugt, wenn die elektrische Antriebseinheit zwischen dem Querdifferential der zweiten Achse und einer Reibkupplung angeordnet ist.

Hierdurch ergibt sich ein konstruktiv einfacher Aufbau, da insbesondere die Ausbildung der Reibkupplung als Hang-On-Kupplung leicht zu realisieren ist.

Unter einer "Hang-On-Kupplung" soll vorliegend bevorzugt eine Reibkupplung verstanden werden, die sowohl offen, geschlossen, als auch im Schlupfbetrieb betrieben werden kann.

Erfindungsgemäß sind der der elektrische Motor, ein Planetenradsatz und das Schaltkupplungspaket in dieser Reihenfolge ausgehend von dem Querdifferential der zweiten Achse angeordnet.

Hierdurch ergibt sich eine gute Gewichtsverteilung und eine vergleichsweise einfache Anbindung des Schaltkupplungspaketes an den Ausgang der elektrischen Antriebseinheit.

Gemäß einer weiteren bevorzugten Ausführungsform ist ein Planetenradsatz zwischen dem elektrischen Motor und dem Schaltkupplungspaket angeordnet.

Durch einen Planetenradsatz lässt auf vergleichsweise einfache Weise eine unterschiedliche Übersetzung zwischen der ersten Übersetzung und der zweiten Übersetzung einrichten. Zudem kann ein Planetenradsatz konstruktiv einfach koaxial zu der elektrischen Maschine und dem Schaltkupplungspaket angeordnet werden.

So ist es bspw. bevorzugt, wenn ein Sonnenrad eines Planetenradsatzes mit einer Ausgangswelle des elektrischen Motors verbunden ist.

Ferner ist es vorteilhaft, wenn die erste Schaltkupplung dazu ausgelegt ist, ein Glied, wie bspw. einen Planetenträger, eines Planetenradsatzes mit dem Ausgang der elektrischen Antriebseinheit zu verbinden.

Bei dieser Ausführungsform kann die erste Übersetzung folglich über die Räder des Planetenradsatzes eingerichtet werden.

Gemäß einer weiteren bevorzugten Ausführungsform ist die zweite Schaltkupplung dazu ausgelegt, eine Ausgangswelle des elektrischen Motors mit dem Ausgang der elektrischen Antriebseinheit zu verbinden.

Bei dieser Ausführungsform wird die zweite Übersetzung folglich als Direktübersetzung zwischen der Ausgangswelle des elektrischen Motors und dem Ausgang der elektrischen Antriebseinheit eingerichtet.

Dies verringert den konstruktiven Aufwand.

Bevorzugt ist es auch, wenn die erste und/oder die zweite Schaltkupplung eine Klauenkupplung mit einer Schaltmuffe ist, die in einer Längsrichtung bewegbar ist.

Hierdurch kann das Schaltkupplungspaket mechanisch einfach aufgebaut werden. Bevorzugt werden die erste und die zweite Schaltkupplung mittels des elektrischen Motors synchronisiert.

Auch ist es vorteilhaft, wenn die erste und/oder die zweite Schaltkupplung mittels eines zugeordneten Elektromagnetaktuators betätigt wird.

Bei dieser Ausführungsform ist es vorteilhaft, dass zur Betätigung der Schaltkupplungen keine Hydraulikeinheiten erforderlich sind und auch kein separater elektrischer Motor, der in radialer Richtung einen großen Bauraum im Bereich des Schaltkupplungspaketes benötigen würde.

Ein Elektromagnetaktuator ist bspw. offenbart in dem Dokument WO2007/085348 A1. Die Offenbarung dieses Dokumentes soll vorliegend durch Bezugnahme enthalten sein.

Gemäß einer weiteren bevorzugten Ausführungsform sind die erste und die zweite Schaltkupplung durch eine mechanische Sperreinrichtung gegeneinander verriegelbar.

Hierdurch kann erreicht werden, dass ein gleichzeitiges Einrichten der ersten und der zweiten Übersetzung ausgeschlossen wird. Insbesondere bei Verwendung von Elektromagnetaktuatoren ist diese Ausführungsform vorteilhaft, da hierdurch auch elektronische Fehlbetätigungen ausgeschlossen werden können.

Dabei ist es von besonderem Vorteil, wenn die mechanische Sperreinrichtung an Schaltmuffen der ersten und der zweiten Schaltkupplung angreift.

Auf diese Weise lässt sich die mechanische Sperreinrichtung konstruktiv besonders günstig realisieren.

Bevorzugt ist es hierbei ferner, wenn die Schaltmuffen jeweils einen sich axial erstreckenden Längsabschnitt aufweisen, die radial ineinander angeordnet sind, wobei in einem zwischen den Längsabschnitten vorhandenen Raum wenigstens ein Sperrelement angeordnet ist.

Auf diese Weise kann die Sperreinrichtung konstruktiv einfach realisiert werden, und zwar mit wenigen Bauteilen.

Dabei ist es von besonderem Vorteil, wenn das Sperrelement als Kugel ausgebildet ist und an wenigstens einem der Längsabschnitte eine Radialvertiefung ausgebildet ist, in die die Kugel einschiebbar ist, um die zugeordnete Schaltmuffe axial zu verriegeln.

Gemäß einer alternativen Ausführungsform weist die mechanische Sperreinrichtung eine Sperrwippe auf, die bei einer Bewegung einer Schaltmuffe verschwenkt wird und dabei an der anderen Schaltmuffe angreift, um die andere Schaltmuffe axial zu verriegeln.

Eine Drehachse der Sperrwippe ist bevorzugt quer zu der Betätigungsrichtung der Schaltmuffen ausgerichtet.

Vorzugsweise ist wenigstens eine der Schaltkupplungen als Schaltkupplungsanordnung zum Verbinden von zwei relativ zueinander verdrehbaren Drehkörpern ausgebildet, wie bspw. einer Ausgangswelle des elektrischen Motors und einem Ausgang der elektrischen Antriebseinheit, wobei die Schaltkupplungsanordnung aufweist:
- eine mit dem ersten Drehkörper drehfest verbundene Schaltmuffe, die an dem ersten Drehkörper zwischen einer Schließstellung und einer Offenstellung axial verschieblich gelagert ist;
- einen mit dem zweiten Drehkörper drehfest verbundenen Kupplungskörper, in den die Schaltmuffe in Schließrichtung axial eingeschoben werden kann, um den zweiten Drehkörper in der Schließstellung mit dem ersten Drehkörper in Drehrichtung zu verbinden; und
- eine elektromagnetische Aktuatoranordnung zum axialen Verschieben der Schaltmuffe, wobei die elektromagnetische Aktuatoranordnung ein ringförmiges Magnetgehäuse mit zwei radial nach innen gerichteten Ringschenkeln aufweist, die jeweils über einen Luftspalt mit einem Polkörper magnetisch koppelbar sind, wobei an wenigstens einem der Ringschenkel benachbart zu dem Luftspalt ein Magnetsensor, wie bspw. eine Hall-Sensor angeordnet ist, der dazu ausgelegt ist, ein sich axial aus dem Luftspalt heraus erstreckendes Streumagnetfeld zu erfassen.

Mit der Schaltkupplungsanordnung kann ein Schaltzustand der Schaltkupplung auf vergleichsweise einfache Weise erfasst werden, indem nämlich ein sich axial aus dem Luftspalt heraus erstreckendes Streumagnetfeld erfasst wird. Demzufolge ist es möglich, den Elektromagnetaktuator in radialer Richtung kompakt auszubilden und mit kleinen Luftspalten zu versehen, so dass die Effizienz gesteigert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges gemäß einer ersten Ausführungsform der vorliegenden Erfindung;
- Fig. 2: eine Modifikation des Antriebsstranges der Fig. 1;
- Fig. 3: eine Modifikation des Antriebsstranges der Fig. 1;
- Fig. 4: eine schematische Darstellung der Fluidversorgung einer elektrischen Antriebseinheit eines erfindungsgemäßen Antriebsstranges;
- Fig. 5: eine schematische Darstellung eines Schaltkupplungspaketes einer elektrischen Antriebseinheit eines erfindungsgemäßen Antriebsstranges, wobei das Schaltkupplungspaket mit einer mechanischen Sperreinrichtung ausgestattet ist;
- Fig. 6: die Sperreinrichtung der Fig. 5 in einer ersten Sperrstellung;
- Fig. 7: die Sperreinrichtung der Fig. 5 in einer zweiten Sperrstellung;
- Fig. 8: eine alternative Ausführungsform einer Sperreinrichtung für ein Schaltkupplungspaket einer elektrischen Antriebseinheit eines erfindungsgemäßen Antriebsstranges;
- Fig. 9: eine schematische Darstellung einer Schaltkupplungsanordnung in zwei unterschiedlichen Ansteuerzuständen; und
- Fig. 10: ein Detail X der Fig. 9.

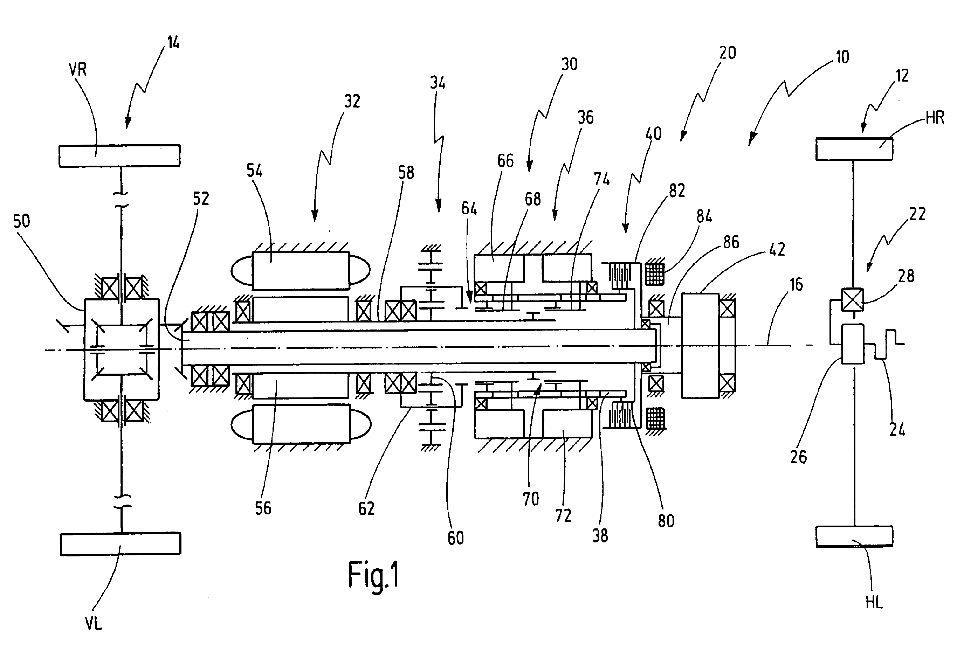

In Fig. 1 ist ein Fahrzeug in Form eines Personenkraftwagens generell mit 10 bezeichnet.

Das Kraftfahrzeug 10 weist eine erste Achse 12 (im vorliegenden Fall eine Hinterachse) mit hinteren Rädern HR, HL und eine zweite Achse 14 (im vorliegenden Fall eine Vorderachse) mit Rädern VR, VL auf. Die erste Achse kann jedoch auch die Vorderachse und die zweite Achse die Hinterachse sein. Eine Längsachse des Fahrzeugs ist bei 16 gezeigt.

Das Kraftfahrzeug 10 ist mit einem Antriebsstrang 20 ausgestattet der eine erste Antriebseinheit 22 aufweist, die im Bereich der ersten Achse 12 angeordnet ist. Die erste Antriebseinheit 22 weist einen Antriebsmotor 24 (bspw. einen Verbrennungsmotor) und ein Stufengetriebe 26 auf, dessen Ausgang mit einem ersten Querdifferential 28 verbunden ist. Das erste Querdifferential 28 verteilt die Antriebsleistung der ersten Antriebseinheit 22 auf die Räder HR, HL.

Der Antriebsstrang 20 weist ferner eine elektrische Antriebseinheit 30 auf, die im Bereich der zweiten Achse 14 angeordnet ist. Die elektrische Antriebseinheit 30 ist generell parallel zu der Längsachse 16 ausgerichtet und beinhaltet einen elektrischen Motor 32, einen Planetenradsatz 34 und ein Schaltkupplungspaket 36, die in dieser Reihenfolge, ausgehend von der zweiten Achse 14, axial nebeneinander angeordnet sind. Die elektrische Antriebseinheit 30 weist ferner einen einzigen Ausgang 38 auf, der auf der der zweiten Achse 14 gegenüberliegenden Seite liegt.

Der Antriebsstrang 20 beinhaltet ferner eine Reibkupplung 40 und eine Ölpumpe 42, die der elektrischen Antriebseinheit 30 zugeordnet sind. Die Reibkupplung 40 ist zwischen der elektrischen Antriebseinheit 30 und der Ölpumpe 42 angeordnet.

Der Antriebsstrang 20 weist keine Kardanwelle auf. Vielmehr wird die erste Achse 12 über die erste Antriebseinheit 22 angetrieben und die zweite Achse 14 ausschließlich über die elektrische Antriebseinheit 30.

Die zweite Achse 14 weist ein zweites Querdifferential 50 auf, das vorliegend als Kegelraddifferential ausgebildet ist. Ein Antriebsrad des zweiten Querdifferentials 50 steht mit einem Ritzel in Eingriff, das an einem Ende einer Eingangswelle 52 für das zweite Querdifferential 50 ausgebildet ist. Die Eingangswelle 52 erstreckt sich von dem zweiten Querdifferential 50 in axialer Richtung durch die elektrische Antriebseinheit 30 hindurch etwa bis zu einem Bereich zwischen der Reibkupplung 40 und der Ölpumpe 42.

Der elektrische Motor 32 weist einen Stator 54 und einen Rotor 56 auf, der mit einer Ausgangswelle 58 verbunden ist. Die Ausgangswelle 58 ist als Hohlwelle um die Eingangswelle 52 herum ausgebildet und erstreckt sich in einer Richtung von dem zweiten Querdifferential 50 weg bis hin zu dem Schaltkupplungspaket 36.

In einem Bereich dazwischen ist der Planetenradsatz 34 angeordnet, und ein Sonnenrad 60 des Planetenradsatzes 34 ist mit der Ausgangswelle 58 des elektrischen Motors 32 verbunden. Ein Hohlrad des Planetenradsatzes 34 ist am Gehäuse festgelegt. Ein Planetenträger 62 des Planetenradsatzes 34 ist drehbar in Bezug auf die Ausgangswelle 58 gelagert und ist über eine erste Schaltkupplung 64 des Schaltkupplungspaketes 36 mit dem Ausgang 38 verbindbar. Der ersten Schaltkupplung 64 ist eine erste elektromagnetische Aktuatoranordnung 66 zugeordnet, die dazu ausgelegt ist, eine erste Schaltmuffe 68 in axialer Richtung (parallel zur Längsachse 16) zu bewegen. Die erste Schaltmuffe 68 ist drehfest mit dem Ausgang 38 (der als Hohlwelle um die Ausgangswelle 58 herum ausgebildet sein kann) drehfest verbunden, jedoch axial verschieblich gelagert. In einer ersten Stellung (Schließstellung) ist die erste Schaltmuffe 68 aus der in Fig. 1 gezeigten Position nach links versetzt, so dass sie in Eingriff mit einer nicht näher bezeichneten Verzahnung (Kupplungskörper) des Planetenträgers 62 in Eingriff gelangt, um so den Planetenträger 62 drehfest mit dem Ausgang 38 zu verbinden.

In der in Fig. 1 gezeigten Stellung (der Offenstellung) ist der Ausgang 38 von dem Planetenträger 62 entkoppelt.

Das Schaltkupplungspaket 36 weist eine zweite Schaltkupplung 70 auf, die mittels einer zweiten elektromagnetischen Aktuatoranordnung 72 betätigbar ist. Die zweite Schaltkupplung 70 weist eine zweite Schaltmuffe 74 auf, die ebenfalls drehfest, jedoch axial verschieblich, an dem Ausgang 38 gelagert ist. In der in Fig. 1 gezeigten Stellung (Offenstellung) ist die zweite Schaltmuffe 74 von einer nicht näher bezeichneten Verzahnung an der Ausgangswelle 58 des elektrischen Motors 32 entkoppelt. Sofern die zweite elektromagnetische Aktuatoranordnung 72 dazu angesteuert wird, die zweite Schaltmuffe 74 nach links zu versetzen, tritt diese in Eingriff mit der Verzahnung an der Ausgangswelle 58, um so die Ausgangswelle drehfest mit dem Ausgang 38 zu verbinden.

Die Reibkupplung 40 ist als Lamellenkupplung ausgebildet und weist einen Innenlamellenträger 80 sowie einen Außenlamellenträger 82 auf. Der Innenlamellenträger ist mit dem Ausgang 38 und mit der Eingangswelle 52 des zweiten Querdifferentials 50 verbunden, und zwar axial gesehen im Bereich der Reibkupplung 40.

Der Außenlamellenträger 82 ist mit einer Antriebswelle 86 für die Ölpumpe 42 verbunden.

Ferner ist bei 84 ein Kupplungsaktuator gezeigt, der in der vorliegenden Ausführungsform bei Betrieb der elektrischen Antriebseinheit 30 generell geschlossen ist, um auf diese Weise bei Betrieb des elektrischen Motors 32 für eine geeignete Fluidversorgung der elektrischen Antriebseinheit 30 zu sorgen.

Bei der vorliegenden Ausführungsform könnte der Ausgang 38 auch starr mit der Antriebswelle 86 verbunden sein. Die Reibkupplung 40 ist vorliegend deswegen eingezeichnet, weil sich die Reibkupplung in Varianten des gezeigten Antriebsstranges 20 auch als Hang-On-Kupplung verwenden lässt.

Die Funktionsweise des Antriebsstranges 20 ist Folgende. Die erste Achse 12 wird in an sich bekannter Weise permanent von der ersten Antriebseinheit 22 angetrieben. Die erste Antriebseinheit 22 ist die Hauptantriebseinheit des Kraftfahrzeuges 10. Bei Bedarf wird die zweite Achse 14 angetrieben (bspw., wenn ein Schlupf zwischen der ersten Achse 12 und der zweiten Achse 14 auftritt). Je nach Geschwindigkeitsbereich des Kraftfahrzeuges wird die Antriebsleistung des elektrischen Motors 32 daher entweder über die erste Schaltkupplung 64, mittels der eine erste Übersetzung zwischen der Ausgangswelle 58 und dem Ausgang 38 eingerichtet wird, oder über die zweite Schaltkupplung 70 (über die eine zweite Übersetzung zwischen der Ausgangswelle 58 und dem Ausgang 38 eingerichtet wird) auf die Eingangswelle 52 und folglich auf den Eingang des zweiten Querdifferentials 50 übertragen.

Generell ist dann, wenn die erste Antriebseinheit 22 abgeschaltet ist, auch ein ausschließlicher Fahrbetrieb über die elektrische Antriebseinheit 30 möglich.

Obgleich dies in Fig. 1 nicht dargestellt ist, versteht sich, dass der elektrischen Antriebseinheit 30 ein geeigneter Energiespeicher sowie eine geeignete Steuereinrichtung zugeordnet sind (nicht dargestellt). Demgemäß kann ein rein elektrischer Fahrbetrieb aus dem elektrischen Energiespeicher heraus erfolgen. Während des Betriebs ist es auch möglich, den elektrischen Motor 32 als Generator zu betreiben, um während der Fahrt den elektrischen Energiespeicher wieder aufzuladen.

Durch die Maßnahme, ein Schaltkupplungspaket 36 mit zwei Schaltkupplungen 64, 70 vorzusehen, mittels denen zwei unterschiedliche Übersetzungen einrichtbar sind, kann die elektrische Antriebseinheit 30 über einen großen Geschwindigkeitsbereich des Kraftfahrzeuges parallel zu der ersten Antriebseinheit 22 verwendet werden.

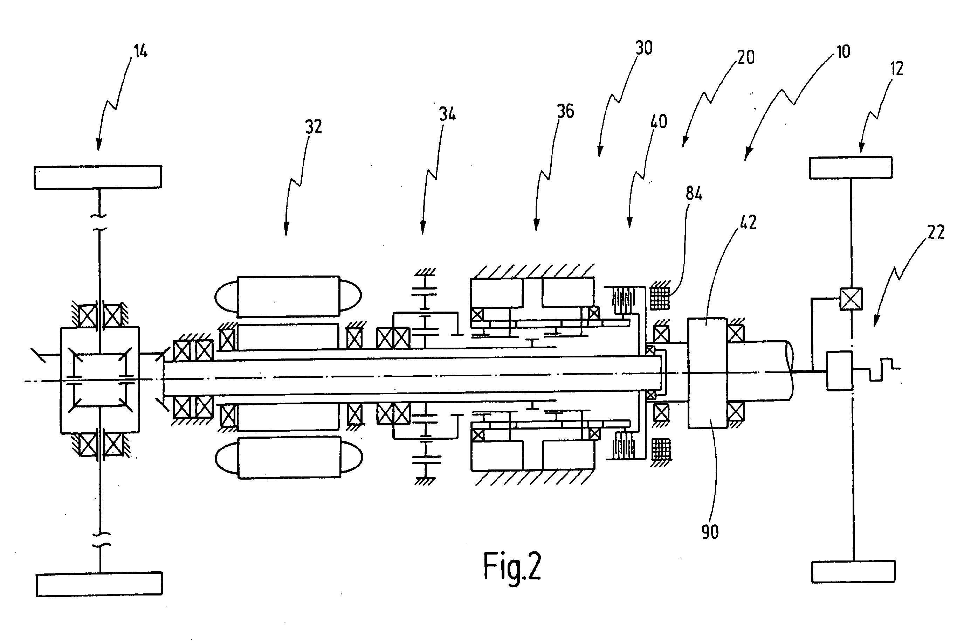

In den nachfolgenden Figuren 2 bis 4 sind Modifikationen des unter Bezugnahme auf Fig. 1 beschriebenen Antriebsstranges 20 dargestellt. Diese weisen generell den gleichen Aufbau und die gleiche Funktionsweise auf wie der Antriebsstrang der Fig. 1. Gleiche Elemente sind daher mit gleichen Bezugsziffern versehen. Im Folgenden werden lediglich die Unterschiede erläutert.

Bei dem Antriebsstrang 20 der Fig. 2 ist ein Ausgang der ersten Antriebseinheit 22 über eine Kardanwelle 90 mit der elektrischen Antriebseinheit 30 verbunden. Die Kardanwelle 90 bildet in diesem Fall auch eine Antriebswelle 86 für die Ölpumpe 42.

Die Reibkupplung 40 kann dabei im Normalfall geöffnet sein. In diesem Fall kann Antriebsleistung der ersten Antriebseinheit 22 ausschließlich auf die erste Achse 12 übertragen werden. Parallel hierzu kann Antriebsleistung der elektrischen Antriebseinheit 30 auf die zweite Achse 14 übertragen werden.

Ferner kann mechanische Antriebsleistung von der ersten Antriebseinheit 22 auch auf die zweite Achse 14 übertragen werden, und zwar durch Schließen der Reibkupplung 40. Die Reibkupplung 40 ist in diesem Fall als Hang-On-Kupplung ausgebildet und wird nach Bedarf (bspw. bei Auftreten einer Drehzahldifferenz zwischen der ersten Achse 12 und der zweiten Achse 14) geschlossen. Die Reibkupplung 40 kann in diesem Fall auch schlupfend betrieben werden.

Ferner kann bei dieser Ausführungsform auch Antriebsleistung von der elektrischen Antriebseinheit 30 als Zusatzleistung in den Abtrieb eingespeist werden, wobei die Ausgangsleistung des elektrischen Motors 32 dabei überwiegend auf die zweite Achse 14 übertragen werden wird. Dies hängt jedoch maßgeblich davon ab, wie die erste Antriebseinheit 22 und die elektrische Antriebseinheit 30 in Bezug zueinander angesteuert werden.

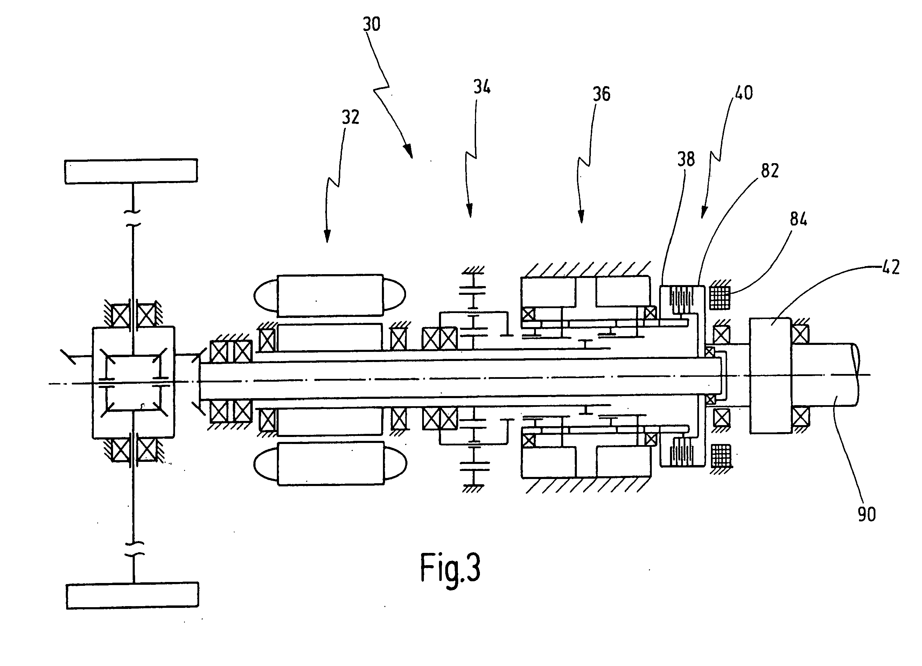

In Fig. 3 ist eine weitere Abwandlung des in Fig. 1 gezeigten Antriebsstranges 20 dargestellt. Auch bei dieser Ausführungsform ist ein Ausgang der ersten Antriebseinheit 22 über eine Kardanwelle 90 mit der Eingangswelle 52 des zweiten Querdifferentials 50 verbindbar, und zwar über die Reibkupplung 40. In diesem Fall ist jedoch der Ausgang 38 der elektrischen Antriebseinheit 30 mit dem Außenlamellenträger 82 und folglich mit der Kardanwelle 90 starr verbunden, wohingegen der Innenlamellenträger 80 starr mit der Eingangswelle 52 verbunden ist.

In diesem Fall kann die elektrische Antriebseinheit 30 Antriebsleistung auch auf die erste Achse 12 übertragen. In diesem Fall kann bspw. der elektrische Motor 32 dazu dienen, den Verbrennungsmotor 24 zu starten.

Ferner kann über die Reibkupplung 40 eine Allradfunktionalität eingerichtet werden, indem die Summe der Leistungen von der elektrischen Antriebseinheit 30 und von der ersten Antriebseinheit 22 über die Reibkupplung 40 auf die Eingangswelle 52 des zweiten Querdifferentials 50 übertragen wird.

Ferner kann der elektrische Motor 32 zur Wirkungsgradoptimierung genutzt werden, insbesondere, wenn als Antriebsmotor 24 ein Verbrennungsmotor verwendet wird. Denn der elektrische Motor 32 kann genutzt wurden, um den Lastpunkt bei dem Verbrennungsmotor 24 zu verschieben. Der Verbrennungsmotor 24 wird hierbei in einem günstigeren Wirkungsgradbereich betrieben und über den elektrischen Motor 32 wird die überschüssige Leistung zumindest teilweise dem Energiespeicher des Fahrzeugs (Antriebsbatterie für den elektrischen Motor 32) zugeführt. Es versteht sich, dass der elektrische Motor 24 dabei als Generator arbeitet. Bei der Ausführungsform der Fig. 3 kann diese Wirkungsgradoptimierung optimal erfolgen, da der Leistungsfluss vollständig über die Kardanwelle 90 erfolgt. Generell ist diese Art von Wirkungsgradoptimierung auch bei den Ausführungsformen der Fig. 1 und 2 möglich Bei diesen Ausführungsformen kann der Leistungsfluss zumindest teilweise über den Reifen-/Fahrbahnkontakt erfolgen (jeweils bei zumindest teilweise geöffneter Reibkupplung 40). Bei den Ausführungsformen der Fig. 1 und 2 erfolgt die Wirkungsgradoptimierung folglich zu Lasten des Reifen-/Fahrbahnkontaktes.

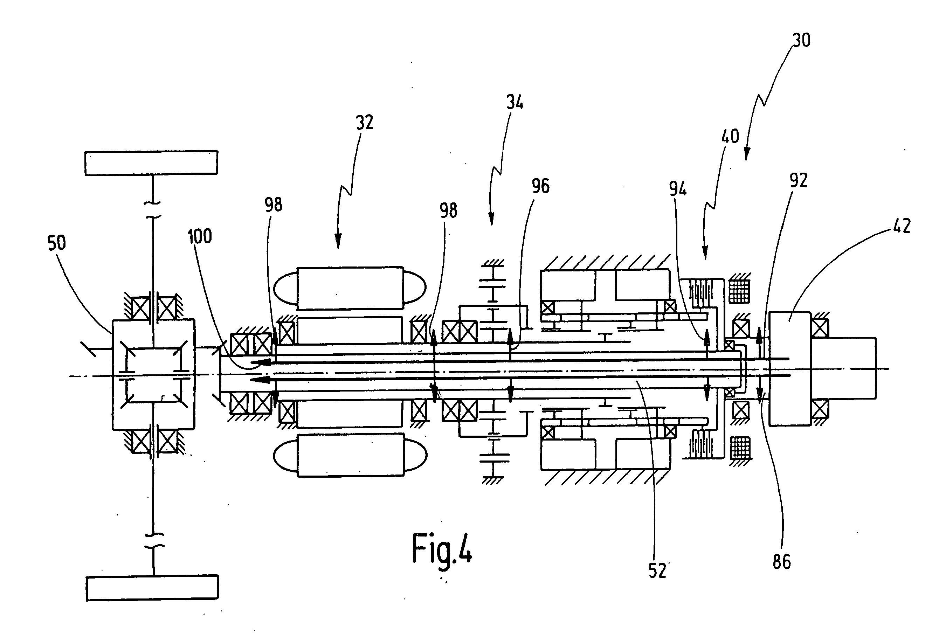

In Fig. 4 ist ein Beispiel gezeigt, wie die elektrische Antriebseinheit 30 mit einem Fluid (bspw. Schmieröl) versorgt werden kann. Die Fluidversorgung kann dabei bei den in den Figuren 1 bis 3 gezeigten Varianten jeweils identisch sein.

Der Bereich des elektrischen Motors 32 wird dabei generell "trocken" gehalten, zu welchem Zweck die auf der linken und rechten Seite gezeigten Lager der Ausgangswelle 58 mit geeigneten Dichtungen versehen werden. Abhängig von der Konstruktion des Antriebsstranges 20 bzw. der elektrischen Antriebseinheit 30 kann der Motorraum des elektrischen Motors 32 jedoch auch als Nassraum ausgeführt werden.

Von der Ölpumpe 42 aus sind geeignete Ölkanäle 92 in der Welle 90/86 bzw. in der Eingangswelle 52 ausgebildet. Über diese Ölkanäle 92 kann eine Einspritzschmierung der Reibkupplung 40 und des Planetenradsatzes 34 erfolgen (bei 94 bzw. 96 gezeigt). Bei 98 ist gezeigt, dass auch eine Einspritzschmierung der Lager der Ausgangswelle 58 erfolgen kann.

Bei 100 ist gezeigt, dass ferner Fluid über die Ölpumpe 42 zu dem zweiten Querdifferential 50 gefördert werden kann, in dem in der Regel eine Tauchschmierung erfolgt. Auch der Kegeltrieb des zweiten Querdifferentials 50 und ggf. ein differentialseitiges Lager der Eingangswelle 52 können auf diese Weise tauchgeschmiert werden.

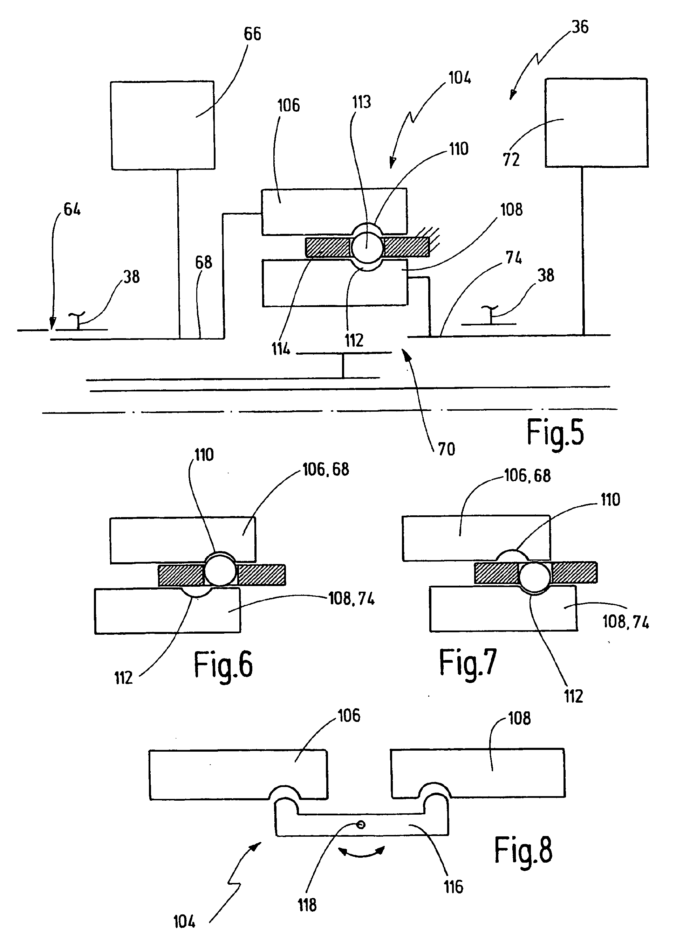

In Fig. 5 ist das Schaltkupplungspaket 36 in schematischer Form dargestellt, wobei gezeigt ist, dass die Betätigung der ersten Schaltkupplung 64 und der zweiten Schaltkupplung 70 mittels einer Sperreinrichtung 104 gegeneinander gesperrt werden kann. Zu diesem Zweck weist die erste Schaltmuffe 68 einen ersten Längsabschnitt 106 auf. Die zweite Schaltmuffe 74 weist einen zweiten Längsabschnitt 108 auf. Die Längsabschnitte 106, 108 sind axial miteinander ausgerichtet und weisen einen Zwischenraum auf, innerhalb dessen ein Sperrelement, bspw. in Form einer Kugel 113, angeordnet ist. An dem radialen Innenumfang des äußeren Längsabschnittes 106 ist eine erste Radialvertiefung 110 ausgebildet. An dem radial äußeren Umfang des inneren Längsabschnittes 108 ist eine zweite Radialvertiefung 112 ausgebildet. Das Sperrelement 113 ist generell in axialer Richtung durch eine Führungsmuffe des Schaltkupplungspaketes 36 bzw. mittels eines mit der Welle und/oder den Schaltmuffen umlaufenden Führungselementes 114 fest, jedoch in radialer Richtung beweglich gelagert.

In Fig. 6 ist gezeigt, dass das Sperrelement 113 in die erste Radialvertiefung 110 gedrückt wird, wenn die zweite Schaltmuffe 74 nach links bewegt wird. Hierdurch wird die erste Schaltmuffe 68 in axialer Richtung gesperrt.

In Fig. 7 ist gezeigt, dass das Sperrelement 113 in die zweite Radialvertiefung 112 gedrückt wird, um die zweite Schaltmuffe 74 zu sperren, wenn die erste Schaltmuffe 68 in Axialrichtung bewegt wird.

In Fig. 8 ist eine alternative Form einer Sperreinrichtung 104 gezeigt, die durch eine Sperrwippe 116 realisiert ist. Auch in diesem Fall weist die erste Schaltmuffe 68 einen ersten Abschnitt 106 auf, der einem Arm der Sperrwippe 116 zugeordnet ist. Die zweite Schaltmuffe 74 weist einen zweiten Abschnitt 108 auf, der dem zweiten Arm der Sperrwippe 116 zugeordnet ist. Sobald eine der Schaltmuffen 68, 74 bewegt wird, wird die Sperrwippe 116 verschwenkt, und zwar um eine Dreh- bzw. Wippachse 118 zwischen den Armen herum, die quer zur Axialrichtung ausgerichtet ist. Hierdurch wird die jeweils andere Schaltmuffe gesperrt.

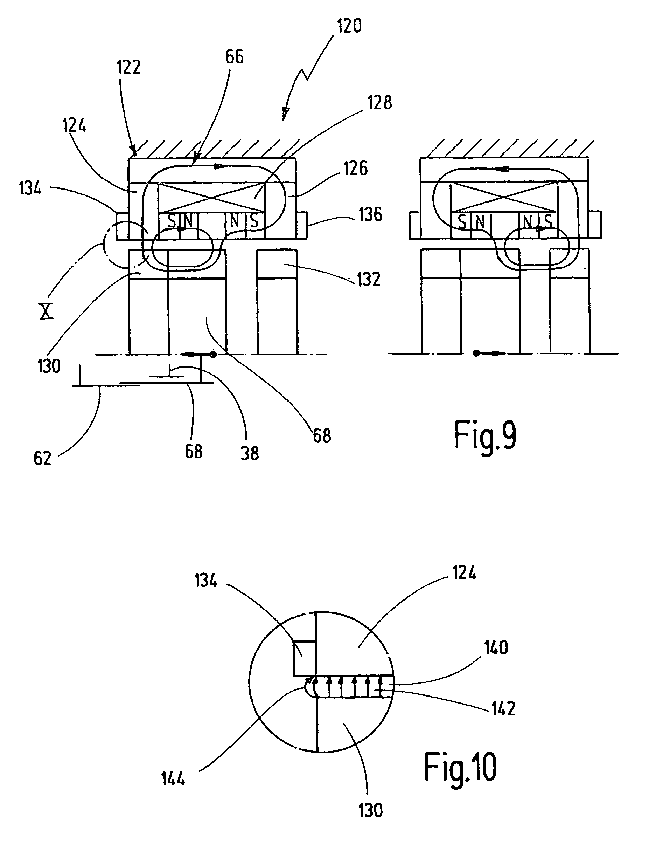

In den Figuren 9 und 10 ist eine Schaltkupplungsanordnung dargestellt. Die Schaltkupplungsanordnung kann bspw. als erste Schaltkupplung 64 oder als zweite Schaltkupplung 70 ausgebildet sein (im vorliegenden Fall sind die Bezugszeichen der ersten Schaltkupplung 64 verwendet).

Die in den Figuren 9 und 10 gezeigte Schaltkupplungsanordnung 120 weist ein generell ringförmiges Magnetgehäuse 122 auf, das einen ersten Ringschenkel 124 und einen zweiten Ringschenkel 126 aufweist, zwischen denen eine Spule 128 eines Elektromagnetaktuators angeordnet ist. Ferner sind in dem Zwischenraum zwei Permanentmagnete angeordnet. Je nach Stromrichtung in der Spule 128 wird eine Schaltmuffe 68 entweder nach links (wie in Fig. 9 links gezeigt) bewegt oder nach rechts (wie durch den Pfeil auf der rechten Seite der Fig. 9 angedeutet).

Die Schaltmuffe kann wie bei der Ausführungsform der Figuren 1 bis 3 an einer Welle wie einem Ausgang einer elektrischen Antriebseinheit axial verschieblich gelagert sein und mit einem zweiten Drehkörper (bspw. dem Planetenträger 62 oder auch einem Losrad eines Stimradsatzes) in Eingriff treten.

Die Schaltkupplungsanordnung 120 weist ferner einen ersten Polkörper 130 und einen zweiten Polkörper 132 auf, zwischen denen ein Ankerabschnitt der Schaltmuffe 68 axial bewegbar ist.

An den axial gegenüberliegenden Seiten der Ringschenkel 124, 126 ist jeweils ein Magnetsensor 134, 136 in Form eines Hall-Sensors vorgesehen. Diese dienen dazu, die Schaltstellung der Schaltkupplungsanordnung 120 zu überwachen, und zwar durch Überwachung eines Streumagnetfeldes. Die Hall-Sensoren 134, 136 sind dabei gehäusefest genauso wie das Magnetgehäuse 122, wohingegen die Polkörper 130, 132 und die Schaltmuffe 68 sich drehen können.

In Fig. 10 ist gezeigt, dass zwischen einem radial inneren Ende eines Ringschenkels 124 und einer radial äußeren Fläche des Polkörpers 130 ein Luftspalt 140 eingerichtet ist, innerhalb dessen sich ein Magnetfeld 142 zum Schließen eines magnetischen Kreises ausbreitet. Am axial äußeren Rand ergibt sich dabei ein Streumagnetfeld 144, das von dem Magnetsensor 134 erfasst werden kann.

Auf der linken Seite der Fig. 9 ist bspw. ein Magnetfluss zwischen dem Ringschenkel 124 und dem Polkörper 130 eingerichtet, was von dem zugeordneten Magnetsensor 134 erfasst werden kann (über das Streumagnetfeld 144). Andererseits ist zwischen dem zweiten Ringschenkel 126 und dem zweiten Polkörper 132 kein Magnetfluss eingerichtet, was von dem zweiten Magnetsensor 136 erfasst werden kann.

Bei Umpolung der Spule ergibt sich bspw. ein magnetischer Kreis, wie er auf der rechten Seite der Fig. 9 gezeigt ist. Hierdurch wird die Schaltmuffe 68 nach rechts bewegt, wie es in Fig. 9 durch einen Pfeil angezeigt ist (in Fig. 9 ist noch der Ausgangszustand gezeigt, vor der Bewegung nach rechts). Befindet sich die Schaltmuffe 68 bei unbestromter Spule in der rechten Endlage, so bildet sich ein ähnlicher Verlauf der Magnetfeldlinien aus, wie er im rechten Bild von Fig. 9 dargestellt ist. Dabei kann beispielsweise das durch den oder die Permanentmagnete erzeugte magnetische Feld erfasst werden.

Auch dieser Zustand kann von den Magnetsensoren 134, 136 erfasst werden, so dass die Schaltstellung (Endlage) mittels der Magnetsensoren 134, 136 eindeutig erfassbar ist.

Bevorzugt wird für jede Schaltkupplung 64, 70 der elektrischen Antriebseinheit 30 der Figuren 1 bis 3 eine Schaltkupplungsanordnung 120 der in den Figuren 9 und 10 gezeigten Art eingesetzt.

Dabei versteht sich, dass die in den Figuren 9 und 10 gezeigte elektromagnetische Aktuatoranordnung nur beispielhaft zu verstehen ist. Alternative Ausführungsformen von solchen elektromagnetischen Aktuatoranordnungen sind in dem Dokument WO2007/085348 A1 offenbart, dessen Offenbarungsgehalt vorliegend durch Bezugnahme enthalten sein soll.

Auch bei den anderen Varianten von dort gezeigten Elektromagnetaktuatoranordnungen sind axial äußere Magnetsensoren 134, 136 verwendbar, die ein sich axial aus einem Luftspalt 140 heraus erstreckendes Streumagnetfeld 144 erfassen.

## Patentansprüche

1. Antriebsstrang (20) für ein Kraftfahrzeug (10), das eine erste und eine zweite Achse (12, 14) aufweist, mit einer ersten Antriebseinheit (22) zum permanenten Antrieb der ersten Achse (12), wobei die erste Antriebseinheit (22) einen Verbrennungsmotor (24) und ein Stufengetriebe (26) aufweist, dessen Ausgang mit einem ersten Querdifferential verbunden ist, und mit einer elektrischen Antriebseinheit (30), die im Bereich der zweiten Achse (14) angeordnet ist und einen elektrischen Motor (32) sowie ein Schaltkupplungspaket (36) aufweist, wobei die elektrische Antriebseinheit (30) parallel zu einer Eingangswelle (52) eines zweiten Querdifferentials (50) der zweiten Achse (14) angeordnet ist,
**dadurch gekennzeichnet, dass**
das Schaltungskupplungspaket (36) eine erste Schaltkupplung (64) zur Einrichtung einer ersten Übersetzung und eine zweite Schaltkupplung (70) zur Einrichtung einer zweiten Übersetzung zwischen dem elektrischen Motor und einem Ausgang (38) der elektrischen Antriebseinheit (30) beinhaltet, wobei
der elektrische Motor (32), ein Planetenradsatz (34) und das Schaltkupplungspaket (36) in dieser Reihenfolge ausgehend von dem zweiten Querdifferential (50) der zweiten Achse (14) angeordnet sind.

2. Antriebsstrang nach Anspruch 1, wobei der Ausgang (38) der elektrischen Antriebseinheit (30) starr bzw. verdrehstarr mit der Eingangswelle (52) des Querdifferentials (50) verbunden ist.

3. Antriebsstrang nach Anspruch 2, wobei der Ausgang (38) der elektrischen Antriebseinheit (30) über eine Kupplung (40) mit einer Ölpumpe (42) zur Fluidversorgung der elektrischen Antriebseinheit (30) verbunden ist.

4. Antriebsstrang nach einem der Ansprüche 1 bis 3, wobei der Ausgang (38) der elektrischen Antriebseinheit (30) über eine Reibkupplung (40) mit der Eingangswelle (52) des Querdifferentials (50) verbindbar ist.

5. Antriebsstrang nach Anspruch 1, wobei der Ausgang (38) der elektrischen Antriebseinheit (30) über eine Reibkupplung (40) mit einer Kardanwelle (90) verbindbar ist, die mit der ersten Antriebseinheit (22) verbunden ist.

6. Antriebsstrang nach einem der Ansprüche 1 bis 5, wobei die elektrische Antriebseinheit (30) zwischen dem Querdifferential (50) der zweiten Achse (14) und einer Reibkupplung (40) angeordnet ist.

7. Antriebsstrang nach Ansprüch 3 wobei sich die Eingangswelle (52) von dem zweiten Querdifferential (50) in axialer Richtung durch die elektrische Antriebseinheit (30) hindurch etwa bis zu einem Bereich zwischen der Reibkupplung (40) und der Ölpunfe (42) erstreckt.

8. Antriebsstrang nach einem der Ansprüche 1 bis 7, wobei ein Sonnenrad (60) eines Planetenradsatzes (34) mit einer Ausgangswelle (58) des elektrischen Motors (32) verbunden ist.

9. Antriebsstrang nach einem der Ansprüche 1 bis 8, wobei die erste Schaltkupplung (64) dazu ausgelegt ist, ein Glied (62) eines Planetenradsatzes (34) mit dem Ausgang (38) der elektrischen Antriebseinheit (30) zu verbinden.

10. Antriebsstrang nach einem der Ansprüche 1 bis 9, wobei die zweite Schaltkupplung (70) dazu ausgelegt ist, eine Ausgangswelle (58) des elektrischen Motors (32) mit dem Ausgang (38) der elektrischen Antriebseinheit (30) zu verbinden.

11. Antriebsstrang nach einem der Ansprüche 1 bis 10, wobei die erste und/oder die zweite Schaltkupplung (64, 70) eine Klauenkupplung mit einer Schaltmuffe (68, 74) ist, die in einer Längsrichtung bewegbar ist.

12. Antriebsstrang nach einem der Ansprüche 1 bis 11, wobei die erste und/oder die zweite Schaltkupplung (64, 70) mittels eines zugeordneten Elektromagnetaktuators (66, 72) betätigt wird.

13. Antriebsstrang nach einem der Ansprüche 1 bis 12, wobei die erste und die zweite Schaltkupplung (64, 70) durch eine mechanische Sperreinrichtung (104) gegeneinander verriegelbar sind.

14. Antriebsstrang nach Anspruch 1, wobei der elektrische Motor (32) einen Stator (54) und einen Rotor (56) aufweist, der mit einer Ausgangswelle (58) verbunden ist, die als Hohlwelle um die Eingangswelle (52) herum ausgebildet ist und sich in einer Richtung von dem zweiten Querdifferential (50) hin zu dem Schaltkupplungspaket (36) erstreckt.

15. Antriebsstrang nach einem der Ansprüche 1 bis 14, wobei wenigstens eine der Schaltkupplungen als Schaltkupplungsanordnung zum Verbinden von zwei relativ zweinander verdrehbaren Drehkörpern (38, 62) ausgebildet ist, die aufweist:
- eine mit einem ersten Drehkörper (38) drehfest verbundene Schaltmuffe (68), die an dem ersten Drehkörper (38) zwischen einer Schließstellung und einer Offenstellung axial verschieblich gelagert ist;
- einen mit einem zweiten Drehkörper (62) drehfest verbundenen Kupplungskörper, in den die Schaltmuffe (68) in Schließrichtung axial eingeschoben werden kann, um den zweiten Drehkörper (62) in der Schließstellung mit dem ersten Drehkörper (38) zu verbinden; und
- eine elektromagnetische Aktuatoranordnung (66) zum axialen Verschieben der Schaltmuffe (68), wobei die elektromagnetische Aktuatoranordnung (66) ein ringförmiges Magnetgehäuse (122) mit zwei radial nach innen gerichteten Ringschenkeln (124, 126) aufweist, die jeweils über einen Luftspalt (140) mit einem Polkörper (130, 132) magnetisch koppelbar sind, wobei an wenigstens einem der Ringschenkel (124, 126) axial benachbart zu dem Luftspalt (140) ein Magnetsensor (134, 136) angeordnet ist, der dazu ausgelegt ist, ein sich axial aus dem Luftspalt (140) heraus erstreckendes Streumagnetfeld (144) zu erfassen.

## Claims

1. Drive train (20) for a motor vehicle (10) which has a first and a second axle (12, 14), said drive train having a first drive unit (22) for permanently driving the first axle (12), the first drive unit (22) having an internal combustion engine (24) and a multistep transmission (26), the output of which is connected to a first transverse differential, and an electric drive unit (30), which is arranged in the region of the second axle (14) and has an electric motor (32) and a selector clutch group (36),
the electric drive unit (30) being arranged parallel to an input shaft (52) of a second transverse differential (50) of the second axle (14),
**characterized in that**
the selector clutch group (36) contains a first selector clutch (64) for setting up a first transmission ratio and a second selector clutch (70) for setting up a second transmission ratio between the electric motor and an output (38) of the electric drive unit (30),
the electric motor (32), a planetary gearset (34) and the selector clutch group (36) being arranged in this order, starting from the second transverse differential (50) of the second axle (14).

2. Drive train according to Claim 1, in which the output (38) of the electric drive unit (30) is connected in a rigid or torsionally rigid manner to the input shaft (52) of the transverse differential (50).

3. Drive train according to Claim 2, in which the output (38) of the electric drive unit (30) is connected via a coupling (40) to an oil pump (42) for supplying fluid to the electric drive unit (30).

4. Drive train according to one of Claims 1 to 3, in which the output (38) of the electric drive unit (30) can be connected via a friction clutch (40) to the input shaft (52) of the transverse differential (50).

5. Drive train according to Claim 1, in which the output (38) of the electric drive unit (30) is connected via a friction clutch (40) to a cardan shaft (90), which is connected to the first drive unit (22).

6. Drive train according to one of Claims 1 to 5, in which the electric drive unit (30) is arranged between the transverse differential (50) of the second axle (14) and a friction clutch (40).

7. Drive train according to Claim 3, in which the input shaft (52) extends axially from the second transverse differential (50), through the electric drive unit (30), approximately as far as a region between the friction clutch (40) and the oil pump (42).

8. Drive train according to one of Claims 1 to 7, in which a sun gear (60) of a planetary gearset (34) is connected to an output shaft (58) of the electric motor (32).

9. Drive train according to one of Claims 1 to 8, in which the first selector clutch (64) is designed to connect a member (62) of a planetary gearset (34) to the output (38) of the electric drive unit (30).

10. Drive train according to one of Claims 1 to 9, in which the second selector clutch (70) is designed to connect an output shaft (58) of the electric motor (32) to the output (38) of the electric drive unit (30).

11. Drive train according to one of Claims 1 to 10, in which the first and/or the second selector clutch (64, 70) is a jaw clutch with a sliding sleeve (68, 74), which can be moved in a longitudinal direction.

12. Drive train according to one of Claims 1 to 11, in which the first and/or the second selector clutch (64, 70) is actuated by means of an associated electromagnetic actuator (66, 72).

13. Drive train according to one of Claims 1 to 12, in which the first and the second selector clutch (64, 70) are locked with respect to one another by a mechanical locking device (104).

14. Drive train according to Claim 1, in which the electric motor (32) has a stator (54) and a rotor (56), which is connected to an output shaft (58) which is designed as a hollow shaft surrounding the input shaft (52) and extends from the second transverse differential (50) in one direction to the selector clutch group (36).

15. Drive train according to one of Claims 1 to 14, in which at least one of the selector clutches is formed as a selector clutch arrangement for connecting two rotational bodies (38, 62) that can be rotated relative to one another, having:
- a sliding sleeve (68), which is connected in a rotationally fixed manner to a first rotational body (38) and is supported on the first rotational body (38) in such a way that it can be moved axially between a closed position and an open position;
- a coupling body, which is connected in a rotationally fixed manner to a second rotational body (62) and into which the sliding sleeve (68) can be pushed axially in the closing direction in order to connect the second rotational body (62) to the first rotational body (38) in the closed position; and
- an electromagnetic actuator arrangement (66) for moving the sliding sleeve (68) axially, the electromagnetic actuator arrangement (66) having an annular magnet housing (122) with two annular limbs (124, 126) pointing radially inwards, each of which can be coupled magnetically via an air gap (140) to a pole body (130, 132), a magnetic sensor (134, 136) designed to detect a stray magnetic field (144) extending axially out of the air gap (140) being arranged axially adjacent to the air gap (140) on at least one of the annular limbs (124, 126).

## Revendications

1. Chaîne motrice (20) pour un véhicule automobile (10), qui présente un premier et un deuxième essieu (12, 14), comprenant un premier groupe propulseur (22) pour l'entraînement permanent du premier essieu (12), le premier groupe propulseur (22) présentant un moteur à combustion (24) et un engrenage réducteur (26) dont la sortie est reliée avec un premier différentiel transversal, et comprenant un groupe propulseur électrique (30) qui est disposé dans la zone du deuxième essieu (14) et qui présente un moteur électrique (32) ainsi qu'un bloc d'accouplement débrayable (36), le groupe propulseur électrique (30) étant disposé en parallèle avec un arbre d'entrée (52) d'un deuxième différentiel transversal (50) du deuxième essieu (14),
**caractérisée en ce que**
le bloc d'accouplement débrayable (36) contient un premier accouplement débrayable (64) pour établir un premier rapport de démultiplication et un deuxième accouplement débrayable (70) pour établir un deuxième rapport de démultiplication entre le moteur électrique et une sortie (38) du groupe propulseur électrique (30),
le moteur électrique (32), un jeu de pignons planétaires (34) et le bloc d'accouplement débrayable (36) étant disposés dans cet ordre à partir du deuxième différentiel transversal (50) du deuxième essieu (14).

2. Chaîne motrice selon la revendication 1, avec laquelle la sortie (38) du groupe propulseur électrique (30) est reliée de manière rigide ou en rigidité de torsion avec l'arbre d'entrée (52) du différentiel transversal (50).

3. Chaîne motrice selon la revendication 2, avec laquelle la sortie (38) du groupe propulseur électrique (30) est reliée par le biais d'un accouplement (40) avec une pompe à huile (42) d'alimentation en fluide du groupe propulseur électrique (30).

4. Chaîne motrice selon l'une des revendications 1 à 3, avec laquelle la sortie (38) du groupe propulseur électrique (30) peut être reliée par le biais d'un accouplement à friction (40) avec l'arbre d'entrée (52) du différentiel transversal (50).

5. Chaîne motrice selon la revendication 1, avec laquelle la sortie (38) du groupe propulseur électrique (30) peut être reliée par le biais d'un accouplement à friction (40) avec un arbre à cardan (90) qui est relié avec le premier groupe propulseur (22).

6. Chaîne motrice selon l'une des revendications 1 à 5, avec laquelle le groupe propulseur électrique (30) est disposé entre le différentiel transversal (50) du deuxième essieu (14) et un accouplement à friction (40).

7. Chaîne motrice selon la revendication 3, avec laquelle l'arbre d'entrée (52) s'étend depuis le deuxième différentiel transversal (50) dans le sens axial à travers le groupe propulseur électrique (30) jusqu'à approximativement une région entre l'accouplement à friction (40) et la pompe à huile (42).

8. Chaîne motrice selon l'une des revendications 1 à 7, avec laquelle une roue solaire (60) d'un jeu de pignons planétaires (34) est reliée avec un arbre de sortie (58) du moteur électrique (32).

9. Chaîne motrice selon l'une des revendications 1 à 8, avec laquelle le premier accouplement débrayable (64) est conçu pour relier un membre (62) d'un jeu de pignons planétaires (34) avec la sortie (38) du groupe propulseur électrique (30).

10. Chaîne motrice selon l'une des revendications 1 à 9, avec laquelle le deuxième accouplement débrayable (70) est conçu pour relier un arbre de sortie (58) du moteur électrique (32) avec la sortie (38) du groupe propulseur électrique (30).

11. Chaîne motrice selon l'une des revendications 1 à 10, avec laquelle le premier et/ou le deuxième accouplement débrayable (64, 70) est un accouplement à griffes muni d'un manchon de débrayage (68, 74) qui peut être déplacé dans le sens longitudinal.

12. Chaîne motrice selon l'une des revendications 1 à 11, avec laquelle le premier et/ou le deuxième accouplement débrayable (64, 70) est actionné au moyen d'un actionneur électromagnétique (66, 72) associé.

13. Chaîne motrice selon l'une des revendications 1 à 12, avec laquelle le premier et/ou le deuxième accouplement débrayable (64, 70) peuvent être verrouillés mutuellement par un dispositif de blocage mécanique (104).

14. Chaîne motrice selon la revendication 1, avec laquelle le moteur électrique (32) présente un stator (54) et un rotor (56) qui est relié avec un arbre de sortie (58), lequel est disposé autour de l'arbre d'entrée (52) sous la forme d'un arbre creux et s'étend dans une direction depuis le deuxième différentiel transversal (50) vers le bloc d'accouplement débrayable (36).

15. Chaîne motrice selon l'une des revendications 1 à 14, avec laquelle au moins l'un des accouplements débrayables est réalisé sous la forme d'un arrangement d'accouplement débrayable pour relier deux corps rotatifs (38, 62) pouvant effectuer une torsion l'un par rapport à l'autre, lequel présente :
- un manchon de débrayage (68) relié en rotation solidaire avec un premier corps rotatif (38), lequel est monté sur le premier corps rotatif (38) de manière à pouvoir coulisser dans le sens axial entre une position de fermeture et une position d'ouverture ;
- un corps d'accouplement relié en rotation solidaire avec un deuxième corps rotatif (62), dans lequel le manchon de débrayage (68) peut être inséré dans le sens axial dans le sens de la fermeture afin de relier le deuxième corps rotatif (62) avec le premier corps rotatif (38) dans la position de fermeture ; et
- un arrangement actionneur électromagnétique (66) pour décaler le manchon de débrayage (68) dans le sens axial, l'arrangement actionneur électromagnétique (66) présentant un boîtier magnétique (122) de forme annulaire avec deux branches d'anneau (124, 126) dirigées vers l'intérieur dans le sens radial, lesquelles peuvent respectivement être accouplées magnétiquement avec un corps polaire (130, 132) par le biais d'un entrefer (140), un capteur magnétique (134, 136) étant disposé sur au moins l'une des branches d'anneau (124, 126), voisin de l'entrefer (140) dans le sens axial, lequel est conçu pour détecter un champ magnétique diffus (144) qui s'étend dans le sens axial hors de l'entrefer (140).
